# EUROPEAN PATENT APPLICATION

(11) **EP 2 982 720 A1**
(43) Date of publication of application: **10.02.2016**
(21) Application number: 15178667.0
(22) Date of filing: 17.12.2010
(51) Int. Cl.: C09D 11/10

(54) **POLYMERIC COMPOSITION**

(30) Priority: 17.12.2009 EP 09179631
(62) Divisional of application: 10796377.9
(71) Applicant: DSM IP Assets B.V., 6411 TE Heerlen (NL)
(72) Inventor: SATGURUNATHAN, Rajasingham, 6100 AA ECHT (NL); MARTIN, Emilio, 6100 AA ECHT (NL); GEEL, VAN Adrianus Antonius Johannes, 6100 AA ECHT (NL); SUYKERBUYK, Franciscus Adrianus Johannes, 6100 AA ECHT (NL); SENATORE, Daniela, 6100 AA ECHT (NL); BÜCKMANN, Alfred Jean Paul, 6100 AA ECHT (NL)
(74) Representative: Verhaegen, Ilse Maria M.

(57) **Abstract**

There is described a substantially solid, solvent free, radiation curable composition comprising
a) optionally from 0.1 % to 99.9% by weight of a colorant; and
b) from 0.1% to 99.9% of radiation curable polymer obtained and/or obtainable from at least one mono-(terminal functional forming) monomer of formula I:

R¹(R²)C=CR³(C=O)(X)ₙR⁴ Formula 1,

where
n is 0 or 1,
X¹ is oxy or -NR⁵- (where R⁵ represents H or optionally substituted organo), R¹ independently represents optionally substituted C₁₋₁₀hydrocarbo, hydroxyl, optionally substituted C₂₋₁₀hydrocarbo-oxy comprising a ring moiety, and/or carboxy; and
R², R³ and R⁴ each independently represent H, an optional substituent and/or optionally substituted organo groups and where n is 0, R³ may also represent oxy or -NR⁵-; and

c) optionally from 0.1% to 90% of a radiation curable high molecular weight reactive diluent; and
d) optionally from 0.01 to 10% of at least one photo-initiator; and
where the radiation curable polymer (b) is
i) obtained and/or obtainable in a suspension polymerisation process using a cobalt catalyst as a chain transfer agent;
ii) is solid under standard conditions; and
iii) is mono-(terminal functional) comprising one terminally located activated unsaturated moiety (such as of Formula 1 herein).

where the composition has at least one of the properties (A) to (F):
A) is substantially free of volatile organic compounds (VOCs);
B) has a residual concentration of initiator (such as peroxide) of less than 0.025 g per g of polymer;
C) comprises a polymer having a total ethylenic unsaturation (for example from moiet(ies) of Formula 1, such as C=C and/or (meth)acrylate) greater than 0.1 milli-equivalents C=C per g polymer;
D) is substantially-free of sulphur comprising species;
E) is substantially free of cobalt (II) species; and/or
F) has a weight average molecular weight (M_{w}) of less then 25kDa.

## Description

The present invention relates to the field of radiation curable polymeric compositions especially those suitable as components of inks.

An ink is a vehicle used to carry a colorant (such as a pigment or dye) onto a substrate to form an image and/or text thereon. Typically inks are applied to the substrate by printing. Conventional printing inks may comprise a mixture of components such as: solvents, pigments, dyes, resins, lubricants, solubilisers, surfactants, particulate matter, fillers, fluorescent materials, reactive diluents and/or other ingredients. These components may be used to impart desired end properties to the ink for example by modifying flow, viscosity, thickness and/or visual appearance of the dry ink. Polymeric inks comprise components which after printing are cured in situ to form a cross-linked polymeric network to create an image with improved properties (such as good durability etc).

The present invention relates to coatings and inks and components therefore in which the curing is achieved (at least in part) by irradiation. Radiation curable inks (also referred to herein as UV-curable inks) have several advantages over thermally cured inks for example they can use thermally sensitive ingredients and be applied to thermally sensitive substrates.

A typical radiation curable ink comprises a reactive diluent which is cured when the ink is irradiated to form a polymeric network. Conventionally radiation curable inks also comprise inert filler which does not react when irradiated. The filler is used to reduce the shrinkage of the ink after curing and also reduce cost, as filler is usually cheaper than expensive reactive diluents. Prior art fillers include low molecular weight solid synthetic acrylic polymers such as acrylics, polyesters, urethanes,and acrylic-urethanes.

It would be advantageous to replace some (preferably substantially all) of the inert filler in inks with a reactive diluent (such as a reactive polymer) to improve the properties of the final coating or ink. Preferred reactive diluents would exhibit low shrinkage, be radiation curable and/or cheap.

Solid acrylic polymers have been used commercially in UV-curable inks and coatings. These acrylic polymers need to be of low molecular weight to in order to achieve an optimum performance. Use of low molecular weight polymers allows a higher concentration of acrylic groups to be present in the composition, to over come typical shortcomings of UV-curable systems; such as: shrinkage, poor substrate adhesion and poor inter-coat adhesion, and low flexibility of the cured film.

Mercaptans have been used as agents to control the degree of polymerisation in an attempt to produce low molecular weight acrylic radiation-curable reactive diluents. However such polymers are too viscous to be commercially useful. The concentration of mercaptans needed to control molecular weight is high so large residual amounts of mercaptans remain in the product and are difficult to remove completely. The product thus has an unacceptable odour and is unsuitable for applications where the ink may require regulatory approval for food contact (e.g. food packaging).

An another approach to achieve a low molecular weight acrylic reactive diluent is to use bulk and/or solution polymerisation optionally combined with high concentrations of initiator. This method is difficult to control. It is a high energy process and is expensive. High amounts of residual initiator (such as radical sources) can remain in the product which is undesirable for example because such additives are not approved for food contact and/or they adversely effect the thermal and UV stability of the product. Products made by this method include pigment grinding vehicle which is available commercially from Dow under the trade name Paraloid™ DM55 which is 100% solids acrylic resin

The use of cobalt complexes as catalyst in catalytic transfer polymerisations (CCTP) are described for example from the applicant's patent applications WO 95-17435 and WO 96-13527. Neither application suggests the polymers prepared by these methods may be useful in radiation curable inks.

US7423072 (= US 2002-0086914) (3M) describes low-viscosity radiation curable inks for ink jet printing for outdoor applications. The ink comprises a) an oligo / resin component; (b) a radiation curable, reactive diluent comprising (i) 0.1 to 50 weight %t of an adhesion promoting, radiation curable component comprising one or more heterocyclic, radiation curable monomer and/or an alkoxylated monomer comprising pendant alkoxylated functionality and no main chain alkoxylated functionality and (ii) no more than about 10 weight percent of an optional alkoxylated, radiation curable monomer comprising main-chain alkoxylated functionality. These oligo / resins are designed for use in liquid inks and are different from the polymers made using CCTP that are described herein.

DE 10027670 describes UV curable compositions with are free of VOC and having from 5 to 80% by weight of (meth)acrylative, 5 to 75% by weight reactive solvent" 0.1 to 5 % by weight thixotropic material, 0.1 to 10% photo-initator and 0.05 to 20% of other additives.

EP 1469036 (Callano AG) describes UV-curable compositions comprising polyacrylates with additives and oligiomers having UV curable functional groups thereon capable of reacting with the polyacrylates (such oligomers being for example urethane acrylates).

US5919834 describes thermoplastic heat transfer labels for decorating substrates, where the label is cured by UV in situ so a cured ink image is transferred onto the substrate to which the label is attached. The heat transferred ink compositions may comprise various conventional components including acrylate monomers.

Research Disclosure number 462078 published October 2002, describes 'Low molecular weight polymers and oligomers made using catalytic chain transfer suspension polymerisation'. These polymers may be used in inks however this document does not teach that such resins may be used to prepare UV curable inks.

Recently I found a Patent (see 1) where they claim the preparation of aplha-methylene butyrolactone (alpha-MBL) based omo and copolymer using CCTP (Cobalt Catalyst is very similar if not ours).

As prior art, they mention the US of our Cobalt patent family (US 5770665), but they also say that we do not teach a-MBL polymerization via CCTP. True. As far as I know, we (as R&T) have been looking at a-MBL as a renewable monomer only since short time.
Now, in our patent application 277554, we do not mention a-MBL, but we should. What do you think?

Due to increasing interest in aplha-MBL and since its polymerization via CCTP based suspension technology is highly feaseable, we should mention it in our 277554.

In addition, we are planning to test Fatty acid functionalized monomer as FX-520 (see 2) and commercial benzophenone methacrylates (see 3).

In any case, maybe worth to mention them in our "patent list of monomers". a-MBL, FX-520, Benzophone methacrylate and also commercial renewable fatty acid methacrylates (See Sartomer C12-C14 Alkyl acrylates, 4) based solid acrylics may be good canditates for new "100 % UV formulation" solid acrylics and we shall cover them then.

It is an object of the present invention to solve some or all of the problems identified herein with the prior art to provide a radiation curable solid acrylic polymer of low molecular weight and coatings and inks comprising such a polymer.

Therefore broadly in accordance with one aspect of the present invention there is provided:
a substantially solid, solvent free, radiation curable composition comprising
   a) optionally from 0.1 % to 99.9% by weight of a colorant; and
   b) from 0.1% to 99.9% of radiation curable polymer obtained and/or obtainable from at least one mono-(terminal functional forming) monomer of formula I:

      R¹R²)C=CR³(C=O)(X¹)ₙR⁴ Formula 1,

      where
      n is 0 or 1,
      X¹ is oxy or -NR⁵- (where R⁵ represents H or optionally substituted organo),
      R¹ independently represents optionally substituted C₁₋₁₀hydrocarbo, hydroxyl, optionally substituted C₂₋₁₀hydrocarbo-oxy comprising a ring moiety, and/or carboxy; and
      R², R³ and R⁴ each independently represent H, an optional substituent and/or optionally substituted organo groups and where n is 0, R³ may also represent oxy or -NR⁵-; and
   c) optionally from 0.1 % to 90% of a radiation curable high molecular weight reactive diluent; and
   d) optionally from 0.01 to 10% of at least one photo-initiator; and
      where the radiation curable polymer (b) is
      i) obtained and/or obtainable in a suspension polymerisation process using a cobalt catalyst as a chain transfer agent;
      ii) is solid under standard conditions; and
      iii) is mono-(terminal functional) comprising one terminally located activated unsaturated moiety (such as of Formula 1 herein).
      where the composition has at least one of the properties (A) to (F):
      A) is substantially free of volatile organic compounds (VOCs);
      B) has a residual concentration of initiator (such as peroxide) of less than 0.025 g per g of polymer;
      C) comprises a polymer having a total ethylenic unsaturation (for example from moiet(ies) of Formula 1, such as C=C and/or (meth)acrylate) greater than 0.1 milli-equivalents C=C per g polymer;
      D) is substantially-free of sulphur comprising species;
      E) is substantially free of cobalt (II) species; and/or
      F) has a weight average molecular weight (M_{w}) of less then 25kDa.

One embodiment of one aspect of the present invention also relates to acrylic polymers (preferably homo- or co-polymers) which can be prepared and/or are preparable using suspension polymerisation optionally catalytic chain transfer polymerisation (CCTP) and such polymers may be suitable for use in radiation curable inks and/or coatings.

In another embodiment of the invention the radiation curable mono functional polymer [(b)(iii)] may comprise a terminal functional group selected from the group consisting of, an ethylenically unsaturated bond (C=C), an unsaturated fatty acid, an acrylate [for example CH₂=CHCOOR] and a methacrylate [for example CH₂=C(CH₃)COOR].

In a still other embodiment of the invention the radiation curable mono functional polymer [(b)(iii)] may comprise from 50 to 70%, preferably from 80 to 90% more preferably > 90% of (meth)acrylate moiet(ies) [conveniently methacrylate moiet(ies)] by weight of the radiation curable mono polymer.

In a still other embodiment of the invention the at least one terminal functional moiety that comprises the radiation curable mono functional polymer [(b)(iii)] may comprise hydrocarbo methacrylate(s) optionally substituted by one or more hydroxyl, epoxy, carboxy and/or urea moeity. Conveniently the hydrocarbo moiety may be C₁₋₂₀hydrocarbyl, more conveniently C₁₋₁₄alkyl most conveniently C₁₋₁₀alkyl, for example C₁₋₈alkyl. Preferred methacrylate(s) comprise: methyl methacrylate, ethyl methacrylate, isooctyl methacrylate, 4-methyl-2-pentyl methacrylate, 2-methylbutyl methacrylate, isoamyl methacrylate, sec-butyl methacrylate, n-butyl methacrylate, 2-ethylhexyl methacrylate, isodecyl methacrylate, isononyl methacrylate, isodecyl methacrylate, and/or hydroxyl, epoxy, carboxy and/or urea substituted versions thereof and/or mixtures thereof. More preferred methacryaltes comprise: allyl methacrylate (ALMA), iso-butyl methacrylate (iBMA), n-butyl methacrylate (nBMA), iso-bornyl methacrylate (iBOMA), ethyl methacrylate (EMA), glycidyl methacrylate (GMA), 2-hydroxypropyl methacrylate (HPMA), methacrylic acid (MAA), methyl methacrylate (MMA) and/or mixtures thereof.

In a still yet other embodiment of the invention provides a final composition having no more than 0.25 %, preferably less than 0.1 %of residual initiator by weight of the total composition. Without wishing to be bound by any mechanism the applicant believes that higher amounts of residual initator would adversely effect the stability of the radiation curable composition.

The solid acrylic polymers described above can be designed such that polymers are soluble in the typically UV applied reactive diluents, to concentration which allows viscosities to be obtained that are optimum for compositions to be used as UV cured inks and/or films.

The following terms are used herein as defined:
'CCTP' denotes catalytic chain transfer polymerisation (e.g. preferably using cobalt catalysts, more preferably those described in WO 95-17435 or WO96-13527);
'CCTP-acrylic' denotes an acrylic polymer (such as those polymers described herein) made by radical suspension polymerisation with CCTP optionally using a suitable cobalt catalyst); and
'CTA-acrylic' denotes a conventional acrylic polymer made by a free-radical living polymerisation using any suitable CTA (chain transfer agent).

Similarly 'CTCTP-polymer' and 'CTA-polymer' denote any polymer made using a CCTP and CTA respectively.

Without wishing to be bound by any mechanism the applicant believes that suitable control of acrylic polymer molecular weight (e.g. using CCTP) may obtain acrylic polymers that can be used in UV-curable inks and/or coatings (optionally as fillers) to improve their performance over inks and coatings that comprise conventional acrylic polymers (such as CTA-acrylics). It is believed that the improved performance of compositions with CCTP-acrylics over those with CTA-acrylics may be due to the presence of an unsaturated group at the polymer chain end in CCTP-acrylics (optionally generated by a cobalt catalyst during CCTP). The pendant unsaturated groups of a CCTP-acrylic may be activated by irradiation on curing to react with reactive groups of a reactive diluent (e.g. typically polyacrylates such as di- tri- or tetra- acrylates) to become part of the final cured polymeric network. Thus CCTP acrylics may act like covalently bonded network spacers between CTA acrylics in the (optional) reactive diluent. The polymers of the invention may have unsaturated groups at end of polymer chain so may be polymerised by radical polymerisation, and on irradiation can co-cure with reactive diluent. Use of CCTP allows compositions of the invention to be substantially free of solvent and mercaptan. For example if t-BPEH is used as an initiator, some t-butylalchol is produced as decomposition produc, however, this amount is quite low (< 1%).

CCTP acrylic polymers may have improvements over CTA acrylics in one or more of the following:
1) Higher cure speed
2) Freedom of formulation (e.g. epoxy acrylates cannot be used with conventional CTA acrylics as the epoxy ring opens upon storage and reacts further to produce a product with an unstable and too high viscosity)
3) Film hardness development
4) Overall resistance (e.g. CCTP-acrylics may act as reactive fillers and may covalently bond within the irradiated matrix, to reduce weakening of final coat).

Another aspect of the present invention provides a radiation curable polymer obtained and/or obtainable from at least one mono-(terminal functional forming) monomer of formula I:

R¹(R²)C=CR³(C=O)(X¹)ₙR⁴ Formula 1,

where
n is 0 or 1,
X¹ is oxy or -NR⁵- (where R⁵ represents H or optionally substituted organo),
R¹ independently represents optionally substituted C₁₋₁₀hydrocarbo, hydroxyl, optionally substituted C₂₋₁₀hydrocarbo-oxy comprising a ring moiety, and/or carboxy; and
R², R³ and R⁴ each independently represent H, an optional substituent and/or optionally substituted organo groups and where n is 0, R³ may also represent oxy or -NR⁵ ; and
where the radiation curable polymer is
i) obtained and/or obtainable in a suspension polymerisation process using a cobalt catalyst as a chain transfer agent;
ii) is solid under standard conditions; and
iii) is mono-(terminal functional) where the terminal functional group is selected from the group consisting of: methacrylate, hydroxyl methacrylate, epoxy methacrylate, carboxy methacrylate and urea methacrylate.

A yet other aspect of the invention provides for a method of preparing a composition comprising the steps of:
I) mixing
   a) optionally from 0.1 % to 99.9% by weight of a colorant; with
   b) from 0.1% to 99.9% of radiation curable polymer of the invention as described herein;
   c) optionally from 0.1% to 90% of a radiation curable high molecular weight reactive diluent
   d) optionally from 0.01 to 10% of at least one photo-initatior; and
   to form a mixture where the composition has at least one of the properties (A) to (E):
   A) is substantially free of volatile organic compounds (VOCs);
   B) has a residual concentration of initiator (such as peroxide) of less than 0.025 g per g of polymer;
   C) comprises a polymer having a total ethylenic unsaturation (for example from moiet(ies) of Formula 1, such as C=C and/or (meth)acrylate) greater then 0.1 milli-equivalents of C=C per g polymer;
   D) is substantially-free of sulphur comprising species; and/or
   E) is substantially free of cobalt (II) species.

A still other aspect of the invention provides for a method of using the compositions and/or polymers of the invention comprising the steps of: coating a substrate (optionally in a printing method) with a composition and/or polymer of the invention (optionally as a printing ink and/or component thereof); and optionally irradiating said substrate with actinic radiation and/or an electron beam to form a cured polymer thereon (optionally a cured image thereon).

Preferably after irradiation the polymer unsaturation disappears.

A further aspect of the invention provides for a substrate coated with a composition and/or polymer of the invention.

Compositions (such as inks) of the present invention may also exhibit improved properties with respect to known compositions for similar uses (such as known inks). Such improved properties may be (preferably as defined below) in at least one, preferably a plurality, more preferably three of more of those propert(ies) labeled 1) to 4) herein. Preferred compositions of the present invention, may exhibit comparable properties (preferably as defined below) in two or more, preferably three or more, most preferably in the rest of those properties labeled 1) to 4) herein

Improved properties as used herein means the value of the composition of the present invention is > +8% of the value of the known reference composition described herein, more preferably > +10%, even more preferably > +12%, most preferably > +15%.

Comparable properties as used herein means the value of the resin and/or the friction material of the present invention is within +/-6% of the value of the known reference composition described herein, more preferably +/- 5%, most preferably +/- 4%.

The reference composition as used herein means a composition prepared from the same components as the composition of the invention to be evaluated (Evaluated Composition) where the amount of CCTP-acrylic in the Evaluated Composition has been replaced by the same amount (by weight) of an equivalent CTA-acrylic.

The percentage differences for improved and comparable properties herein refer to fractional differences between the composition the invention and the known composition where the property is measured in the same units in the same way (i.e. if the value to be compared is also measured as a percentage it does not denote an absolute difference).

Preferably polymers of the invention have a glass transistion temperature (T_{g}) (measured by DSC) of from 35° to 125° C, more preferably from 40° to 100° C, most preferably from 45° to 75° C. It will be appreciated that the optimum T_{g} will be dictated by many factors such as the process used to prepare the polymer and/or its molecular weight distribution. It is particularly preferred that where the polymer is a solid acrylic it has a T_{g} to be more readily processable

Preferably polymers of the invention have a molecular weight (weight average, M_{w}) of less than 40kDa, more preferably from 2.5 to about 25 kDa, most preferably from 5 to 15 kDa.

Preferably the solid polymers of the invention have an average partcle size of from 150 to 1000 microns. Conventionally the particle shapes are substantial speheroidal. The particle sizes given herein are the size of a weight averaged particle and are quoted as a linear dimension which is a particle diameter as the particles can be considered to be essentially spherical. Weight average particle size may be measured using a scanning / transmission electron microscope and photon correlation spectroscopy.

### Radiation curable

As used herein 'radiation curable' denotes a material which will polymerize when irradiated for example with actinic radiation and/or ultraviolet (UV) light (optionally in the presence of another ingredient such as a photo initiator) and/or ionizing radiation (such as electron-beam). Actinic radiation is electromagnetic radiation capable of producing photochemical action, but of insufficient energy to product ions in a medium of common materials and typically has a wavelength of greater than 185 nanometres. UV light is radiant energy typically having a wavelength from 180 to 400 nanometres (1.8 to 4.0 x 10 -7 meters). Ionizing radiation is particle or electromagnetic energy capable of producing ions in common materials; usually energies of greater than about 10 electron volts or 16 x 10-19 joules. Electron beam (e-beam) is a beam of electrons typically displaced from a metallic filament by a high voltage source of acceleration. Preferred methods to achieve radiation polymerization comprise UV light and/or e-beam. The polymerization mechanism can be any suitable method that can be induced by radiation (e.g. free radical, cationic etc). Other suitable sources of curing radiation may be used for example low intensity short wavelengths (< 500 nm) generated by light emitting diodes (LEDs such as those described in US7250611), in which case the radiation properties given above may be different.

Conveniently compositions of the present invention are suitable for use in contact with food. Usefully compositions of the present invention have low or no odour, be substantially free of low molecular weight (e.g. < 100 daltons) reactive diluents.

Advantageously compositions of the present invention may satisfy the regulations in the EU and/or US so they can be sold free of Xi labeling. It is a preferred feature that the polymer of the invention has (and/or can be incorporated without detriment in compositions [such as inks] that have) a benign or very low adverse impact after ingestion by biological systems. It is more preferred that polymers of the invention (and any inks and/or compositions comprising them) comply with the conditions set out in one or more of the relevant EU regulations as of the filing date of the present application, namely: 1935/2004/EC (framework), 2002/72/EC (monomers), 2004/1/EC (1st amendment), 2004/19/EC (2nd amendment), 2005/79/EC (3rd amendment), 2007/19/EC (4th amendment), 2008/39/EC (5th amendment) and/or 2009/975/EC (6th amendment).

Preferred compositions of the present invention are useful as coatings and/or as compositions such as inks (e.g. printing inks), pigment pastes and/or let down vehicles.

### Inks

Inks are formed by diluting a pigment paste (also known as mill paste or pigment vehicle) which comprises a higher concentration of colorant that in a typical ink. The end user will dilute the pigment paste with reactive diluent to form 'let down vehicle'. This 'let down vehicle' can be further diluted with a suitable solvent (and optionally other additives) to form an ink with the desired properties required for printing with the selected method (e.g. suitable viscosity; and colorant concentration that produces the desired ink color). For example typical let down vehicles may comprise from 10 to 85 by weight of colorant compared to 1 to 65% by weight of colorant in the final ink. The present invention includes inks and their corresponding pigment pastes and 'let down vehicles'.

As used herein (unless the context indicates otherwise) the term 'ink' also encompasses all corresponding pigment pastes and/or 'let down vehicles', and it will be understood that in practice a further well known conventional dilution (let down) step may be needed before some of the compositions described herein would in fact be suitable for immediate use in a printing method.

Inks of the invention may be applied to a suitable substrate in any conventional printing method, such as: digital, electrostatic, embossing, engraving, flexographic, gravure, hot-wax dye transfer, ink-jet (such as thermal and/or piezoelectric IJ), intaglio, lithographic, laser printing, letter press, movable type, offset, pad, planographic, relief, reprographic, rotary, rotogravure, screen, thermographic, and/or wood-block printing methods and/or any suitable combinations thereof.

Ink compositions may also include dye or pigment, water or solvent (not in UV and hot melt inks), polymeric binder, humectant and additives such as photo-initiator in radiation curable inks, preservatives, dispersing agents. Inks can be divided in different types. In water based inks, drying involves absorption and penetration into the substrate, followed by evaporation. In oil based types of inks, drying involves absorption and penetration. In solvent based inks, the drying involves mostly evaporation of the solvent. Inks of the invention may also be dried as conventional UV drying inks, by oxidative drying, by two components drying and/or any combinations of these methods. Hot melt inks are solid at room temperature, but are ejected in molten state. Radiation curable inks typically dry by polymerization.

For inks used in some printing methods (such as offset printing) high viscosity is not an issue, for example inks with viscosity of >300 cPas, for example 500 cPa.s are acceptable (effectively a solid) and the ink is used as a paste at high temperatures. Preferred lower viscosity inks for some other printing methods have a viscosity from 0.2 to 6 cPa.s, more preferably 0.4 to 3.5 cPa.s. For ink jet printing it is desired that inks having a very low viscosity at printing temperature, preferably from 5 to 25 mPa.s, more preferably about 15 mPa.s. This is so the ink is readily jettable in small droplets having volumes in the pico-liter range. To achieve these low viscosity values, previous radiation curable inks contained very high levels of reactive diluent. But prior art low viscosity reactive diluents also have a low radiation curing reactivity. Thus previous inks typically had a bad smell and accompanying irritation problems.

It is a preferred object of one embodiment of the present invention to solve some or all of these problems with prior art inks.

### Colorant (composition component (a))

Preferred compositions of the invention comprise a colorant in an amount from 0.1 % to 99.9%, more preferably from 1% to 80%, most preferably from 5 to 60%, for example from 10% to 50% by weight of the total composition. It will be appreciated that in general where the composition of the invention is an ink the concentration of the colorant will be lower than present in the corresponding pigment paste.

Conveniently the colorant may be a dye and/or a pigment.

### Polymer (composition component (b))

Preferred polymeric fillers are radiation curable acrylic polymers obtained by CCTP. More preferred polymers are homo or copolymers, most preferably with a single functional group at one end of the polymer chain. The degree of unsaturation per polymer chain (usefully as C=C bonds) is preferably at least 1. Conveniently the single functional group on the polymer is not derived from the initiator for example is not an initator-derived COOH or OH group and/or is not derived by disproportionation.

### Monomers of Formula 1

The monomers of Formula 1 are mono functional in ethylenic terminal unsaturation, otherwise they would be a cross-link across more than one polymer chain to form a three dimensional polymer network. Without wishing to be bound by any mechanism it is believed that the CCTP-polymer acts a network spacer and does not increase network cross-linking.

Other functional groups may be present on Formula 1 such as hydroxyl, imino, epoxy, carboxy, vinyl, allyl (e.g. ALMA) and/or urea. It is strongly preferred that Formula 1 represents methacrylate not acrylate (as acrylates do not readily undergo the CCTP reaction).

Preferred monomers of Formula 1 are any of those methacrylates already described herein, for example methacrylates selected from the group consisting of: allyl methacrylate (ALMA), iso-butyl methacrylate (iBMA), n-butyl methacrylate (nBMA), iso-bornyl methacrylate (iBOMA), ethyl methacrylate (EMA), glycidyl methacrylate (GMA), 2-hydroxypropyl methacrylate (HPMA), methacrylic acid (MAA) and methyl methacrylate (MMA).

Formula 1 may also comprise and/or represent C₁₋₃₀allyl methacrylate or other polyunsaturated moieties (such as fatty acids) capable of being polymerised by CTTP. For example Formula 1 may represent a general acrylated fatty acid ester such as that represented by:

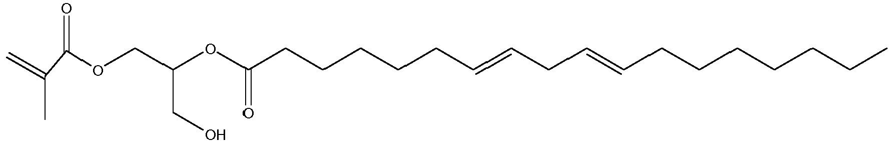

It is preferred that Formula 1 does not represent fatty acid moieties which do not readily undergo radical polymerisation, for example where the saturated moiety of the fatty acid chain is attached via a linear alkylene group to the ethylenically unsaturated moiety. Thus for example it is preferred that Formula 1 is other than:

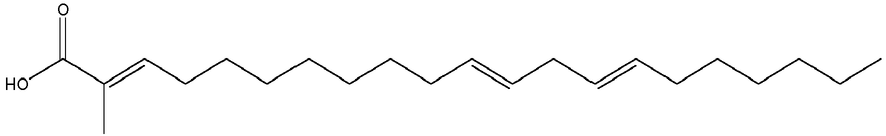

With reference to Formula 1:

Preferably R³ is methylene, or oxy.

Preferably at least one of R¹, R² and R⁴ is: hydroxyl, expoxy and/or carboxy.

Preferably X¹ is oxy or imino and n is 1 or n=0.

More preferably R¹, R² and R⁴ are independently selected from: H, optional substituents and optionally substituted C₁₋₁₀hydrocarbo,

Most preferably R² is H, methyl or OH, and R³ and R⁴ are independently H or CH₃.

Conveniently R² is OH, R³ is CH₃, and R⁴ is H and/or tautomer(s) thereof (for example an acetoacetoxy functional species). More convenient unsaturated ester moieties are selected from: -OCO-CH=CH₂; -OCO-C(CH₃)=CH₂; acetoacetoxy, -OCOCH=C(CH₃)(OH) and suitable tautomer(s) thereof.

Alternatively R¹, R² and R³ are independently H or CH₃, n is 1, X¹ is oxy and R⁴ is

C₂₋₆alkyenylene, with a terminal ethylenic group.

### Suspension polymer from CCTP [polymer property (c)(i)]

Polymerisation methods that do not give terminal ethylenic bonds are not preferred

### Solid polymer [polymer property (c)(ii)]

Preferably polymeric fillers are substantially homogenous solids that are substantially free of liquid components or domains under standard conditions.

### Mono-(terminal functional) polymer [polymer property (c)(iii)]

Preferred mono-(terminal functional) polymers [item (b)(i)] are those where functional group is selected from the group consisting of: methacrylate, hydroxyl methacrylate, epoxy methacrylate, carboxy methacrylate, and urea methacrylate.

As used herein mono terminal functional denotes moieties having only one functional group located at the end thereof (e.g. at the end of a polymer chain, foe example as a terminal C=C bond). Mono-(terminal functional) does not exclude the possibility of having one or more other functionalities disposed along the polymer chain or dependent therefrom (such as COOH, OH, NH₃, epoxy and/or allyl).

### VOC- free (composition property A)

Preferred compositions are substantially free of solvents, more preferably free of organic solvents and water.

### Low concentration of residual initator (composition property B)

The concentration of organic thermal initiator remaining in the composition of the invention immediately after preparation (residual concentration) is preferably between about 0.1 to 20 moles of intiator per 1 million grams of the composition. Preferably the residual concentration of initiator in the composition is detected by HPLC. It will be appreciated that depending on the initiator after a sufficient amount of time since preparation the amount of initiator in a composition may reduce to zero. The exact concentrations of initiator remaining after the filler polymer has been prepared (using suspension polymerisation) will depend upon a number of factors such as the chain transfer agent, the co-monomer concentrations. Any initiator may be usefully used such as peroxides, azo compounds, and peresters

### Sulphur free (composition property D)

Preferably compositions of the present invention are substantially free of mercaptans.

### Cobalt free (composition property E)

Preferably compositions of the present invention are substantially free of any cobalt, more preferably any transistional metal. Conveniently compositions of the present invention contain less than < 50 ppm of cobalt, more preferably < 20 ppm, most preferably < 10 ppm,

Without wishing to be bound by any mechanism it is believed that as the cobalt chelates typically used in CCTP (such as Co-4-PhMeBF)-are very bulky so are likely to be readily removed during the preparation of the composition and so the levels of any extractable cobalt in the compositions of the invention will be very low.

If we take this value (which corresponds pratically to MMA) we should add all possible reactive diluents used in UV formulations. Ethoxyethoxyethyl acrylate, hexaandioldiacrylate, lauryl acrylate, isobornyl acrylate, octyl decyl acrylate, phenoxy ethyla carylate, isodecyl acrylate, hexanedioldiacrylate,polypropylene glycol di acrylates, polyethyleneglycol di acrylates , polypropylene glycol acrylates, polyethyleneglycol acrylates tetraethylene glycol acrylatem triethylene glycol acrylate, di propyleneglycol diacrylate, Neopentyl glycol diacrylate, trimethylolpropane acrylate, pentaerythritol tetra acrlylate, di trimethylolpropane tetra acrylate, dipentaerythritol penta acrylate and ethoxylated , propoxylated versions of the monomers mentioned or combinations therof. In addition methacrylates equivalent.

### Reactive diluent (composition component (c))

Composition of the invention may optionally comprise further reactive diluent of high molecular weight as component (c).

Conveniently te high molecular weight further reactive diluent has a weight average molecular weight (Mw) of at least 100 daltons.

Preferred high molecular weight reactive diluents are polyacrylates, more preferably di, tri or tetra acrylates, most preferably are: trimethylolpropane triacrylate (TMPTA); tripropylene glycol diacrylate (TPGDA); EO(PGA) and/or mixtures thereof.

Usefully the reactive diluents are other than: dipropylenetriamine (DPTA); hexane diol diacrylate (HDDA) or Triethylenetetramine (TETA) and it is preferred the compositions of the present invention are substantially free of DPTA, HDDA and TETA.

It is also preferred the composition of the invention is substantially free of chloro and bromo moieties.

The acrylic polymer beads according to the invention are prepared by suspension polymerization (also known as granular, bead, or pearl polymerization due to the shape of the resultant polymer particles) according to known methods in the art as illustrated in the examples.

Typical acrylic monomers used in the invention such as:
1) Unsaturated monomers belonging to the general class of methacrylates, e.g. C1-C30 alkyl irrespective of the functionality
2) Unsaturated monomers belonging to the general class of acrylates, e.g. C1-C30 alkyl irrespective of the functionality
3) Unsaturated hydrocarbon monomers like e.g. butadiene, isoprene, styrene, vinyltoluene, □-methylstyrene, tert.-butylstyrene etc.
4) Unsaturated monomers belonging to the class of vinylhalides, vinylesters, vinylethers
5) Multi-olefinically unsaturated monomers such as di-allylphthalate, allylmethacrylate
6) Any multi unsaturated of any of the aforementioned types.

Initiators for polymerizing the monomers to provide the acrylic polymer beads of the invention may be those which are normally suitable for free-radical polymerization of acrylate monomers, which are oil-soluble and/or have a low solubility in water. Such intiators may comprise organic peroxides, organic peroxyesters and/or organic azo initators. The initiator is generally used in an amount of about 0.01 to 1 % by weight of the total monomer content.

Useful chain transfer agents (CTA) may comprise mercaptans, carbon tetrabromide, cobalt (II) chelates and/or mixtures thereof. The chain transfer agent generally is used in an amount of about 0.001 to 1.0 %, preferably 0.0025 to 0.5 % by weight of the total monomer content.

Optionally, a water soluble inhibitor can be added to inhibit polymerization in the water phase in order to prevent the formation of too much polymer by emulsion and/or solution polymerization in the water phase, which can result in bead agglomeration or emulsion type polymerization. Suitable inhibitors include those selected from thiosulfates, thiocyanates, water soluble hydroquinones and nitrites. When used, the water soluble inhibitor can generally be added in an amount of from about 0.01 to about 1 parts by weight based on 100 parts total monomer content.

Furthermore, a water soluble or water dispersible polymeric stabilizer is needed to stabilize the suspension and in order to obtain stable beads. The stabilizer is preferably a synthetic water soluble or water dispersible polymer such as polyvinylalcohol, polyvinyl acetate, polyvinylpyrrolidone, gelatin, starch, methylcellulose, carboxymethylcellulose, hydroxyethylcellulose, poly(meth)acrylic acid and/or salts thereof (e.g. sodium salts). The stabilizer is preferably used in an amount of about 0.001 to 10 %, more preferably in an amount of about 0.01 to 1 % by weight of the total monomer content.

The monomers, free-radical initiator, and any optional materials can be mixed together in the prescribed ratio to form a premixture. The stabilizer can be combined with water and then with the premix to form an oil in water suspension. The resulting suspension typically comprises from about 10 to about 50 % by weight of the monomer premixture and from about 90 to about 50 % by weight of the water phase. Bead-type suspension polymerization in accordance with the present invention is typically a thermally initiated polymerization and is preferably carried out with agitation for about 2 to about 16 hours at a temperature between about 40° C and 90° C.

After isolation of the beads according to standard methods such as filtration or centrifuging, the beads are preferably subjected to an extended drying, at about 40 to about 100°C depending on the Tg of the final solid acrylic polymer. The drying can be performed by commonly known means to a person skilled in the art such as e.g. using a fluidized bed dryer or a conventional oven. The drying time can be easily adjusted by a person skilled in the art and is usually carried out over an approximate period of 3 to 40 hours, preferably from 8 to 20 hours, and more preferably from 8 to 10 hours.

### General terms

The terms 'optional substituent' and/or 'optionally substituted' as used herein (unless followed by a list of other substituents) signifies the one or more of following groups (or substitution by these groups): carboxy, sulfo, sulfonyl, formyl, hydroxy, amino, imino, nitrilo, mercapto, cyano, nitro, methyl, methoxy and/or combinations thereof. These optional groups include all chemically possible combinations in the same moiety of a plurality (preferably two) of the aforementioned groups (e.g. amino and sulfonyl if directly attached to each other represent a sulfamoyl group). Preferred optional substituents comprise: carboxy, sulfo, hydroxy, amino, mercapto, cyano, methyl, halo, trihalomethyl and/or methoxy, more preferred being methyl, hydroxy and cyano.

The synonymous terms 'organic substituent' and "organic group" as used herein (also abbreviated herein to "organo") denote any univalent or multivalent moiety (optionally attached to one or more other moieties) which comprises one or more carbon atoms and optionally one or more other heteroatoms. Organic groups may comprise organoheteryl groups (also known as organoelement groups) which comprise univalent groups containing carbon, which are thus organic, but which have their free valence at an atom other than carbon (for example organothio groups). Organic groups may alternatively or additionally comprise organyl groups which comprise any organic substituent group, regardless of functional type, having one free valence at a carbon atom. Organic groups may also comprise heterocyclyl groups which comprise univalent groups formed by removing a hydrogen atom from any ring atom of a heterocyclic compound: (a cyclic compound having as ring members atoms of at least two different elements, in this case one being carbon). Preferably the non carbon atoms in an organic group may be selected from: hydrogen, halo, phosphorus, nitrogen, oxygen, silicon and/or sulphur, more preferably from hydrogen, nitrogen, oxygen, phosphorus and/or sulphur.

Most preferred organic groups comprise one or more of the following carbon containing moieties: alkyl, alkoxy, alkanoyl, carboxy, carbonyl, formyl and/or combinations thereof; optionally in combination with one or more of the following heteroatom containing moieties: oxy, thio, sulphinyl, sulphonyl, amino, imino, nitrilo and/or combinations thereof. Organic groups include all chemically possible combinations in the same moiety of a plurality (preferably two) of the aforementioned carbon containing and/or heteroatom moieties (e.g. alkoxy and carbonyl if directly attached to each other represent an alkoxycarbonyl group).

The term 'hydrocarbo group' as used herein is a sub-set of a organic group and denotes any univalent or multivalent moiety (optionally attached to one or more other moieties) which consists of one or more hydrogen atoms and one or more carbon atoms and may comprise one or more saturated, unsaturated and/or aromatic moieties. Hydrocarbo groups may comprise one or more of the following groups. Hydrocarbyl groups comprise univalent groups formed by removing a hydrogen atom from a hydrocarbon (for example alkyl). Hydrocarbylene groups comprise divalent groups formed by removing two hydrogen atoms from a hydrocarbon, the free valencies of which are not engaged in a double bond (for example alkylene). Hydrocarbylidene groups comprise divalent groups (which may be represented by "R₂C=") formed by removing two hydrogen atoms from the same carbon atom of a hydrocarbon, the free valencies of which are engaged in a double bond (for example alkylidene). Hydrocarbylidyne groups comprise trivalent groups (which may be represented by "RC="), formed by removing three hydrogen atoms from the same carbon atom of a hydrocarbon the free valencies of which are engaged in a triple bond (for example alkylidyne). Hydrocarbo groups may also comprise saturated carbon to carbon single bonds (e.g. in alkyl groups); unsaturated double and/or triple carbon to carbon bonds (e.g. in respectively alkenyl and alkynyl groups); aromatic groups (e.g. in aryl groups) and/or combinations thereof within the same moiety and where indicated may be substituted with other functional groups

The term 'alkyl' or its equivalent (e.g. 'alk') as used herein may be readily replaced, where appropriate and unless the context clearly indicates otherwise, by terms encompassing any other hydrocarbo group such as those described herein (e.g. comprising double bonds, triple bonds, aromatic moieties (such as respectively alkenyl, alkynyl and/or aryl) and/or combinations thereof (e.g. aralkyl) as well as any multivalent hydrocarbo species linking two or more moieties (such as bivalent hydrocarbylene radicals e.g. alkylene).

Any radical group or moiety mentioned herein (e.g. as a substituent) may be a multivalent or a monovalent radical unless otherwise stated or the context clearly indicates otherwise (e.g. a bivalent hydrocarbylene moiety linking two other moieties). However where indicated herein such monovalent or multivalent groups may still also comprise optional substituents. A group which comprises a chain of three or more atoms signifies a group in which the chain wholly or in part may be linear, branched and/or form a ring (including spiro and/or fused rings). The total number of certain atoms is specified for certain substituents for example C_{1-N}organo, signifies a organo moiety comprising from 1 to N carbon atoms. In any of the formulae herein if one or more substituents are not indicated as attached to any particular atom in a moiety (e.g. on a particular position along a chain and/or ring) the substituent may replace any H and/or may be located at any available position on the moiety which is chemically suitable and/or effective.

Preferably any of the organo groups listed herein comprise from 1 to 36 carbon atoms, more preferably from 1 to 18. It is particularly preferred that the number of carbon atoms in an organo group is from 1 to 12, especially from 1 to 10 inclusive, for example from 1 to 4 carbon atoms.

As used herein chemical terms (other than IUAPC names for specifically identified compounds) which comprise features which are given in parentheses - such as (alkyl)acrylate, (meth)acrylate and/or (co)polymer - denote that that part in parentheses is optional as the context dictates, so for example the term (meth)acrylate denotes both methacrylate and acrylate.

Certain moieties, species, groups, repeat units, compounds, oligomers, polymers, materials, mixtures, compositions and/or formulations which comprise and/or are used in some or all of the invention as described herein may exist as one or more different forms such as any of those in the following non exhaustive list: stereoisomers (such as enantiomers (e.g. E and/or Z forms), diastereoisomers and/or geometric isomers); tautomers (e.g. keto and/or enol forms), conformers, salts, zwitterions, complexes (such as chelates, clathrates, crown compounds, cyptands / cryptades, inclusion compounds, intercalation compounds, interstitial compounds, ligand complexes, organometallic complexes, non-stoichiometric complexes, π-adducts, solvates and/or hydrates); isotopically substituted forms, polymeric configurations [such as homo or copolymers, random, graft and/or block polymers, linear and/or branched polymers (e.g. star and/or side branched), cross-linked and/or networked polymers, polymers obtainable from di and/or tri-valent repeat units, dendrimers, polymers of different tacticity (e.g. isotactic, syndiotactic or atactic polymers)]; polymorphs (such as interstitial forms, crystalline forms and/or amorphous forms), different phases, solid solutions; and/or combinations thereof and/or mixtures thereof where possible. The present invention comprises and/or uses all such forms which are effective as defined herein.

The term "comprising" as used herein means that the list that immediately follows is non exhaustive and may or may not include any other additional suitable items, for example one or more further feature(s), component(s), ingredient(s) and/or substituent(s) as appropriate. "Substantially comprising" as used herein means a component or list of component(s) is present in a given material in an amount greater than or equal to about 90%, preferably ≥ 95%, more preferably ≥ 98% by weight of the total amount of the given material. The term "consisting of" as used herein mean that the list that follows is exhaustive and does not include additional items.

For all upper and lower boundaries of any parameters given herein, the boundary value is included in each range for each parameter. All combinations of minimum and maximum values of the parameters described herein may be used to define the parameter ranges for various embodiments and preferences of the invention.

It will be understood that the total sum of any quantities expressed herein as percentages cannot (allowing for rounding errors) exceed 100%. For example the sum of all components of which the composition of the invention (or part(s) thereof) comprises may, when expressed as a weight (or other) percentage of the composition (or the same part(s) thereof), total 100% allowing for rounding errors. However where a list of components is non exhaustive the sum of the percentage for each of such components may be less than 100% to allow a certain percentage for additional amount(s) of any additional component(s) that may not be explicitly described herein.

For example the percentages described herein (whether as mole % or weight %) for the composition, polymer (s) and parts thereof (e.g. monomer(s)) relate to the percentage of the total amount of certain specified components (e.g. monomer(s)) from which the relevant polymer or part thereof is obtained and/or obtainable. In one (preferred) embodiment of the invention the components specified sum 100% (e.g. no other monomers or units derived therefrom, comprise the relevant composition, polymer or part thereof). However it will be appreciated that in another embodiment of the invention other components (e.g. monomers or units derived therefrom) in addition to those specified above may also comprises the relevant composition, polymer or part thereof so the components explicitly described herein would then add up to less than 100% of the relevant composition, polymer or part therein.

Unless the context clearly indicates otherwise, as used herein plural forms of the terms herein (for example composition, monomer and/or polymer) are to be construed as including the singular form and vice versa.

The terms 'effective', 'acceptable' 'active' and/or 'suitable' (for example with reference to any process, use, method, application, preparation, product, material, formulation, compound, monomer, oligomer, polymer precursor, and/or polymers of the present invention and/or described herein as appropriate) will be understood to refer to those features of the invention which if used in the correct manner provide the required properties to that which they are added and/or incorporated to be of utility as described herein. Such utility may be direct for example where a material has the required properties for the aforementioned uses and/or indirect for example where a material has use as a synthetic intermediate and/or diagnostic tool in preparing other materials of direct utility. As used herein these terms also denote that a functional group is compatible with producing effective, acceptable, active and/or suitable end products.

### Test methods

### Particle size

The particle sizes given herein are the size of a weight averaged particle and are quoted as a linear dimension which is a particle diameter as the particles can be considered to be essentially spherical. Weight average particle size may be measured using Scanning/Transmission Electron Microscope and light scattering

### Standard Conditions

As used herein, unless the context indicates otherwise, standard conditions (e.g. for drying a film or determining morphology of a polymer) means_a relative humidity of 50% ±5%, ambient temperature (23°C ±2°) and an air flow of ≤ 0.1 m/s.

### Carbon double concentration

The amount (in Milli-equivalents per g) of C=C in a sample is determined conventionally by titration.

### Molecular weight determination:

Gel permeation chromatography (GPC) analysis for the determination of polymer molecular weights are performed on an Alliance Waters 2695 GPC with three consecutive PL-gel columns (type Mixed-B, I/d = 300/7.5 mm) using tetrahydrofuran (THF, HPLC grade, stabilized with 3,5-di-tert-butyl-4-hydroxytoluene (BHT), preferably with 1.0 vol% acetic acid) as the eluent at 1 cm³/min and using an Alliance Waters 2410 refractive index detector. A set of polystyrene standards (analysed according to DIN 55672) are used to calibrate the GPC. Samples corresponding to about 16 mg of solid material are dissolved in 8 cm³ of THF. The samples are regularly shaken and dissolved for at least 24 hours for complete "uncoiling" and placed on the auto-sampling unit of the Alliance Waters 2695. The injection volume is 150 µL and the temperature of the column oven is established at 35°C.

### Glass transistion temperature (T_{g})

The T_{g} is measured by DSC using the TA Instruments DSC Q1000 with the standard TA Instruments alumina cups of 50µl. The flow rate is 50 ml/min of nitrogen and the sample is loaded at a temperature range 20 to 25 °C. The sample is cooled until it reached an equilibrium temperature of -90 °C, is heated at a rate of 10 °C/min to approximately 50° above the theoretical Tg, kept for 5 minutes at 100 °C, cooled to -90 °C at a rate of 20 °C/min, kept for 5 minutes at -90°C and subsequently heated at a rate of 10 °C/min to approximately 50° above the theoretical Tg.

### Viscosity

The viscosity measured herein is Brookfield viscosity measured in mPa.s of the diluted sample (40% by weight of the sample in a suitable carrier medium).

### Extractables test

The level of residual cobalt in the compositions of the invention may be tested by mixing the composition with a liquid mixture of ethanol and water (75% / 25% by weight) and removing the liquid and measuring (by any suitable conventional method) the amount of cobalt extracted in the liquid removed.

Many other variations embodiments of the invention will be apparent to those skilled in the art and such variations are contemplated within the broad scope of the present invention.

Further aspects of the invention and preferred features thereof are given in the claims herein.

Various registered trademarks, other designations and/or abbreviations are used herein to denote some of ingredients used to prepare polymers and compositions of the invention. These are identified below by chemical name and/or trade-name and optionally their manufacturer or supplier from whom they are available commercially. However where a chemical name and/or supplier of a material described herein is not given it may easily be found for example in reference literature well known to those skilled in the art: such as: 'McCutcheon's Emulsifiers and Detergents', Rock Road, Glen Rock, N.J. 07452-1700, USA, 1997 and/or Hawley's Condensed Chemical Dictionary (14th Edition) by Lewis, Richard J., Sr.; John Wiley & Sons.
'ALMA' denotes allyl methacrylate;
'Acumer 1510' denotes the polyacrylic acid hydrophilic colloidal solution stabilizer commercially available from Dow under this trade name;
'i-BMA' denotes iso-butyl methacrylate;
'n-BMA' denotes n-butyl methacrylate;
'i-BOMA' denotes iso-bornyl methacrylate;
't-BPO' denotes tert-butyl per-octoate;
'Co-4-PhMeBF' denotes Co (II) (bis 4,4'-dimethylbenzildioxime diboron difluoride) a catalyst for controlled chain transfer polymerisation (CCTP) having the structure 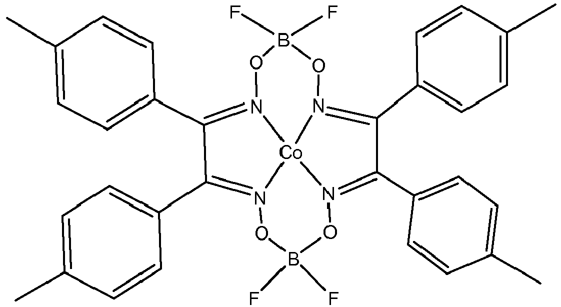 and described in Examples 1 to 3 of WO 96-13527;

Darocur ITX denotes a mixture of 2-isopropylthioxanthone and 4-isopropylthioxanthone available commercially as a photo-initiator (PI) from Ciba under this trade name
'DDM' denotes n-dodecyl mercaptan, a chain transfer agent (CTA);
'EMA' denotes ethyl methacrylate;
'Genorad 16' denotes a stabiliser available commercially from Rahn AG under this trade name.
'GMA' denotes glycidyl methacrylate;
'HDDA' denotes the reactive diluent hexane diol diacrylate;
'HPMA' denotes 2-hydroxypropyl methacrylate;
'Irgacure 379' denotes a photo-initiator (PI) available commercially as a slight yellowish powder from Ciba under this trade name;
'd-LPO' denotes di-lauroyl per-oxide;
'MDEA' denotes the (co)initiator N-methyl diethanol amine;
'PBZ' denotes 4-phenylbenzophenone which is available commercially as a photo-initiator (PI) from Rahn AG under the trade name 'Genocure PBZ'
'MAA' denotes methacrylic acid (CH₂=C(CH₃)CO₂H);
'MMA' denotes methyl methacrylate;
'TMPTA' denotes the reactive diluent trimethylolpropane triacrylate; and
'TPGDA' denotes the reactive diluent tripropylene glycol diacrylate;

### Figures

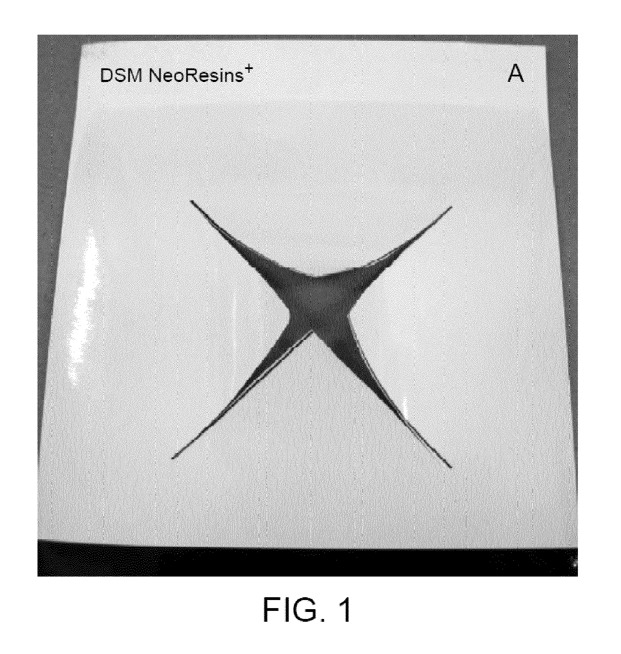

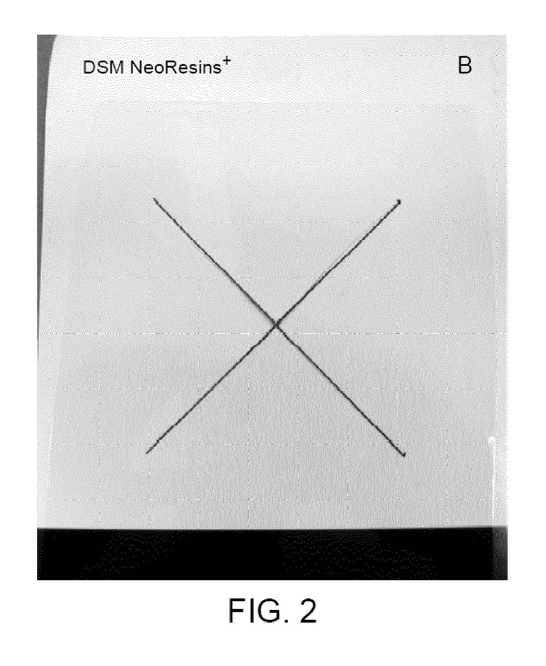

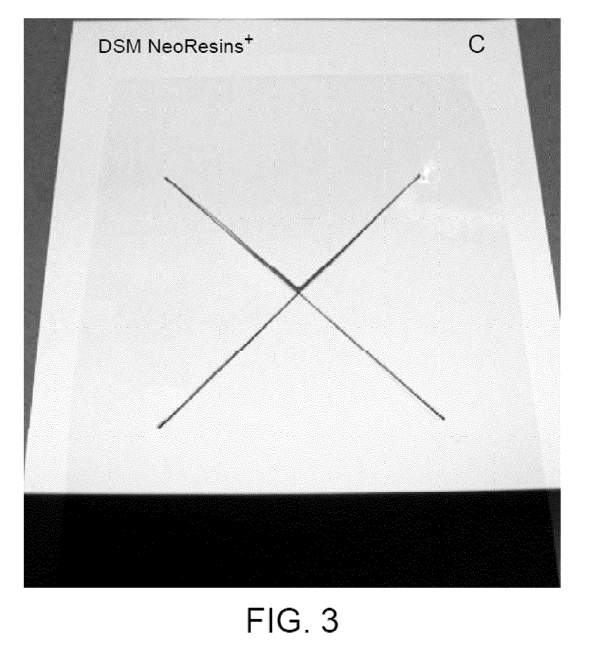

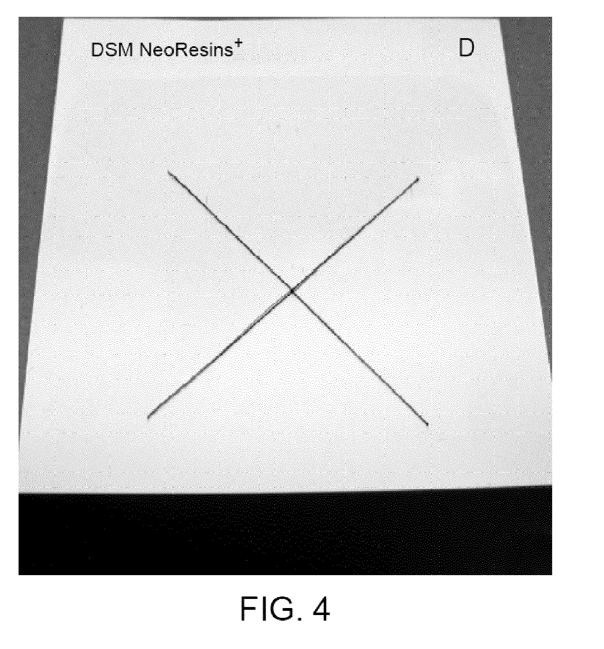

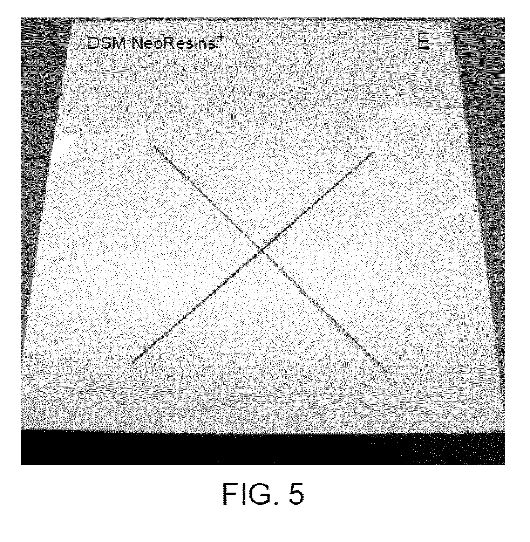

The present invention is illustrated by Figures 1 to 10 herein which are further explained below.

Figures 1 to 5 are photographs of gloss cards prepared as described in the Test Method herein to show shrinkage of various coatings (including comparative coatings and those of the present invention). The gloss card is of thickness 12µ (microns) and a cross is cut into card. The degree of curl of the cross (which relates to the degree of shrinkage) can be evaluated visually on a scale of 0 to 5 where 0 is poor (high curl = high shrinkage) and 5 is excellent (no curl = no shrinkage).

Figure 1 is a photograph of a comparative coating (Test sample A) consisting of only reactive diluents. A large amount of curl can be seen (rating = 1).

Figure 2 is a photograph of a coating of the invention (Test sample B) comprising reactive diluents to which a CCTP-polymer had been added. The curl is minimal, i.e. undetectable shrinkage (rating = 5)

Figure 3 is a photograph of a coating of the invention (Test sample C) comprising reactive diluents to which a CTA-polymer had been added. The curl is minimal, i.e. undetectable shrinkage (rating = 5)

Figure 4 is a photograph of a comparative coating (Test sample D) comprising a solvent based coating comprising a CCTP-polymer. The curl is minimal, i.e. undetectable shrinkage (rating = 5)

Figure 5 is a photograph of a comparative coating (Test sample E) comprising another solvent based coating comprising a CTA -polymer. The curl is minimal, i.e. undetectable shrinkage (rating = 5)

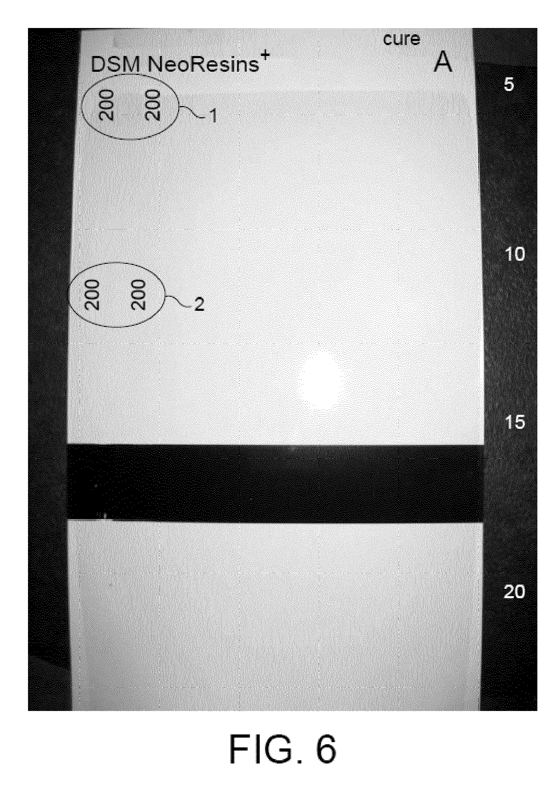

Figures 6 to 10 are photographs of gloss cards prepared as described in the Test Method herein to show the curing effectiveness of various formulations (including comparative formulations and those of the present invention) applied as a clear coat, i.e. with no pigment added. The gloss card is of thickness 6µ (microns) and the curing effectiveness is measured by visually rating the gloss-card after a given amount (200 if not specified) of double rubs with methyl ethyl ketone (MEK) according APP 0217, after each curing pass at various radiation intensities given in mJ/cm². The rating was evaluated on a scale of 0 to 5 where:
1 denotes distinct sign of damage (lowest cure effectiveness)
2 denotes little sign of damage
3 denotes very little sign of damage
4 denotes indistinguishable sign of damage
5 denotes no sign of damage (highest cure effectiveness).

Figure 6 is a photograph of a comparative coating (Formulation A) consisting of only reactive diluents. The double rub test is done by wiping the coating forward and back in the direction perpendicular to the base of the figure. In this case, due to the high gloss, it is difficult to distinguish between the light green (rating = 4) and darker green (rating = 5). The numbers in the top circle (labelled (1)) are the curing energy (mJ/cm²). The numbers in the bottom circle (labelled (2)) are the amount of double rubs.

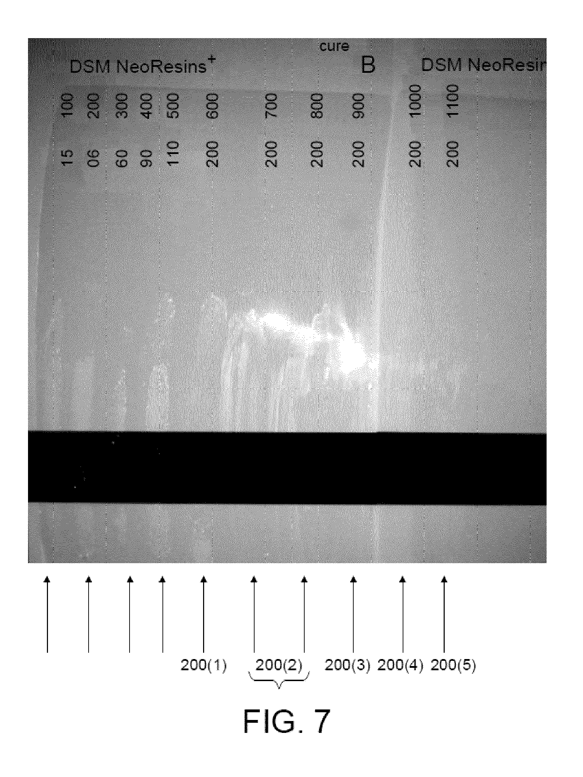

In Figures 7 to 10 the gloss cards are cured differently in strips. The curing is performed by laying the gloss card with the applied coating on a roller bench which is then irradiated with UV. The top line of numbers in the photograph are the curing energy (mJ/cm²) and the bottom line the number of MEK rubs where each test is denoted by numbers and arrows of the same colour.

Figure 7 is a photograph of a coating of the invention (Formulation B) comprising reactive diluents to which a CCTP polymer had been added. The figures in the circles are the amount of MEK double rubs for each test. The number of rubs is also given below the arrows denoting the rating (on the visual determined 1 to 5 scale above) of each strip

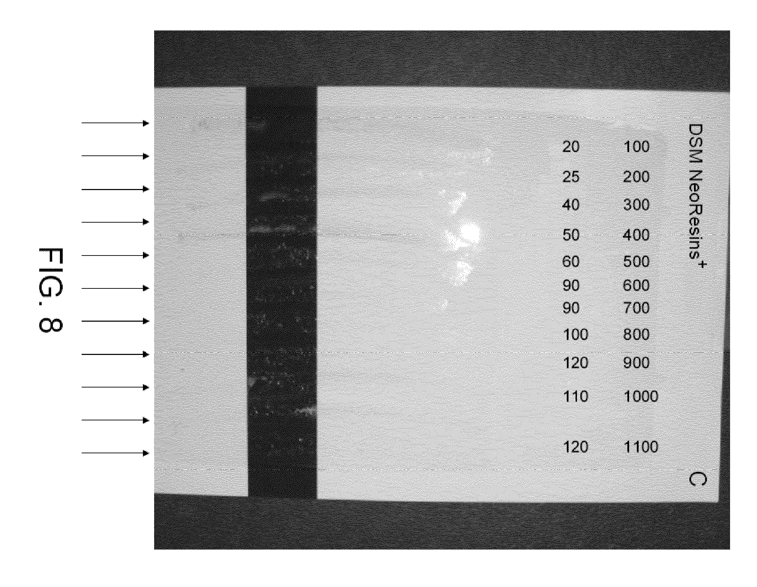

Figure 8 is a photograph of a coating of the invention (Formulation C) comprising reactive diluents to which a CTA-polymer had been added. Compared to Figure 7 it can seen that this coating does not reach the same degree of curing effectiveness as Formulation B

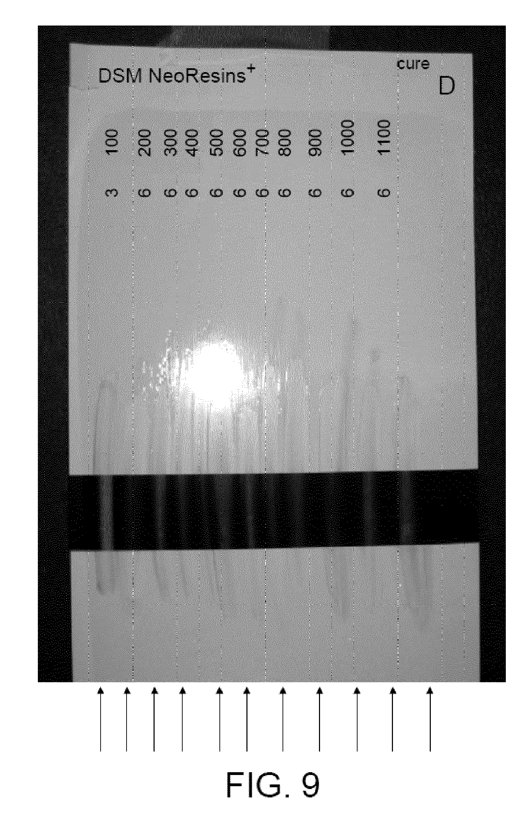

Figure 9 is a photograph of a comparative coating (Formulation D) comprising a CCTP-polymer in solvent. The coating does not cure. Without wishing to be bound by any mechanism it is believed that eventually, the end-double bonds of the CCTP polymer may react partially but the network density is extremely low.

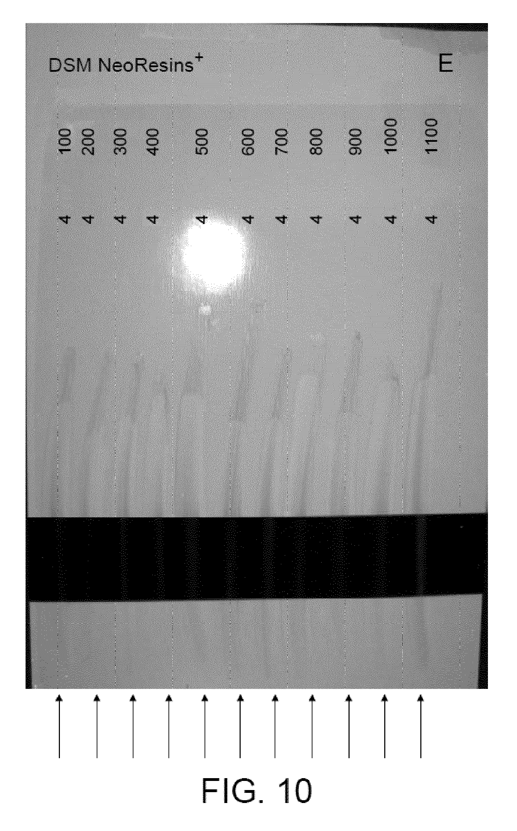

Figure 10 is a photograph of a comparative coating (Formulation E) comprising a CTA-polymer in solvent. The coating does not cure.

### Examples

The present invention will now be described in detail with reference to the following non limiting examples which are by way of illustration only.

### Example 1

### (acrylic homopolymer made with Co catalyst)

An acrylic homo-polymer was prepared by suspension polymerisation using a catalytic chain transfer agent. Polymerisation was conducted in a glass 3-necked reaction vessel with a stainless steel baffle and stirrer and nitrogen inlet. Stabilizers [sodium sulfate (2.4g) and 'Acumer 1510' (9.6g] were added to the reaction flask containing 1,105g of distilled water. A monomer mixture containing i-BMA (480g) was added to a separate stirred feed tank containing t-BPO (3.6g) and Co-4-PhMeBF catalyst (0.036g). The feed tank mixture was then transferred to the reaction vessel and slowly heated under nitrogen to 75°C. This temperature was maintained for 4 hours. After checking that the resultant polymer beads that were formed were hard, the contents of the reaction flask were subsequently heated to 85°C and left at this temperature for another hour. The reactor contents were then cooled, filtered, washed and allowed to dry at 30 to 35°C until the amount of volatile components in the polymer so obtained was less than 1% by weight. The polymer is characterized in Table 1 below.

### Comp A

### (comparative example - acrylic homopolymer made with DDM)

An acrylic polymer was made by suspension polymerisation under analogous conditions to those described in Example 1 above, except the monomer mixture contained i-BMA (480g) to which t-BPO (4.8g) and DDM (19.2 g) was added to obtain as the product, a polymer that is characterized in Table 1 below.

### Example 2

### (acrylic copolymer made by CCTP with Co catalyst)

An acrylic polymer was made by suspension polymerisation under analogous conditions to those described in Example 1 above, except the monomer mixture contained n-BMA (252g), MMA (216g) and MAA (12g) to which t-BPO (3.6g) and Co-4-PhMeBF (0.022g) was added to obtain as the product, a polymer that is characterized in Table 1 below.

### Comp B

### (comparative example - acrylic copolymer made with DDM)

In same set up and under comparable conditions as mentioned under Ex 1, a final polymer was made applying a monomer mixture containing n-BMA (252), MMA (216) and MAA (12g) to which d-LPO (9.6g) and DDM (21.6 g) was added to obtain as the product, apolymer that is characterized in Table 1 below.

### Results

The polymers obtained as described above are characterized in Table 1, where

Volat. denotes the amount of volatile components in the final polymer as a percentage of the total amount of polymer;

PS denotes the average particle size diameter of the polymer particles as measured conventionally by any suitable technique (such as light scattering);

T_{g} denotes glass temperature determined by DSC and measured in °C;

BV. denotes a Brookfield viscosity measured in mPa.s of the diluted polymer (40% by weight of the polymer dissolved in HDDA;) and

M_{w} denotes weight average molecular weight in daltons determined by GPC.

**Table 1 -Characterisation of polymers (Ex 1 & 2 and Comp A & B)**

| Example | Monomers | Volat. | PS | T_{g} | BV. | M_{w} |
|---|---|---|---|---|---|---|
| (by weight % of total monomers) | | (%) | (µm) | (°C) | (mPa.s) | (daltons) |
| Ex 1 | i-BMA(100) | 0.51 | 818 | 33 | 770 | 15,600 |
| Ex 2 | n-BMA(52.2)/MMA(45)/MA(2.5) | 0.37 | 598 | 36 | 440 | 8,500 |
| Comp A | i-BMA(100) | 0.33 | 373 | 36 | NM | 9,400 |
| Comp B | n-BMA(52.5)/MMA(45)/MA(2.5) | 0.57 | 879 | 35 | NM | 9,100 |

In Table 1 the percentages (e.g. of monomers) do not necessarily add up to 100 because of rounding. NM denotes not measured.

All polymers were formulated into inks, UV cured and tested as displayed in Tables 2 and 3 below.

**Table 2 - (ink formulations)**

| | Examples | | | |
|---|---|---|---|---|
| | Ex3 | Ex4 | Comp-C | Comp-D |
| Mill base | | | | |
| E-10-20T (epoxy acrylic) | 24.1 | 24.1 | 24.1 | 24.1 |
| Acrylic polymer | 13.8 | 13.8 | 13.8 | 13.8 |
| | (Ex 1) | (Ex 2) | (Comp A) | (Comp B) |
| Irgalite blue GLO (pigment) | 13.8 | 13.8 | 13.8 | 13.8 |
| HDDA (reactive diluent) | 12.3 | 12.3 | 12.3 | 12.3 |
| Genorad 16 (Inhibitor) | 1.0 | - | 1.0 | |
| Let down | | | | |
| Mill base paste | 53.6 | 64.0 | 58.5 | 64.0 |
| TMPTA (reactive diluent) | 24.3 | 29.0 | 26.5 | 29.0 |
| TPGDA (reactive diluent) | 16.7 | 19.9 | 18.2 | 19.9 |
| MDEA (co-initiator) | 2.0 | 2.4 | 2.2 | 2.4 |
| Irgacure 379 (PI) | 2.2 | 2.6 | 2.4 | 2.6 |
| Darocur ITX (PI) | 2.2 | 2.6 | 2.4 | 2.6 |
| PBZ (PI) | 2.3 | 2.8 | 2.6 | 2.8 |
| Genorad 16 (inhibitor) | 1.0 | 2.0 | 1.0 | 2.0 |
| Total | 105.3 | 125.3 | 114.9 | 125.3 |

The inks prepared above (examples 3 to 4) were tested in the conventional test methods and/or as described herein and the results are given below.

**Table 3 - (ink test results)**

| Examples | | | | |
|---|---|---|---|---|
| (Rating: 0 = poor; 5 = excellent | | | | |
| | | | | |

| | Ex-3 | Ex-4 | Comp-C | Comp-D |
|---|---|---|---|---|
| Passes 3 roll mill to reach particle size | 6 | 7 | 6 | 9 |
| | | | | |
| Viscosity (mPas) | | | | |
| initial | 2060 | 1530 | 2190 | 1940 |
| 1 week | 2160 | Stable | 5800 | >>2000 |
| | | | | |
| Transparency | 4-5 | 5 | 5 | 5 |
| (transparency card. 12 µm) | | | | |
| | | | | |
| Grains, (PET, 12 µm) | 4-5 | 4-5 | 4-5 | 4-5 |
| | | | | |
| Satra rub (leneta transparency card, 12µm) | | | | |
| 4000 Dry | 4-5 | 4 | 4 | 4-5 |
| 4000 olive oil | 4 | 4-5 | 4 | 4-5 |
| | | | | |
| Hardness (König 24 µm) | 70 | 99 | 71 | 91 |
| @1200 mJ cure | | | | |
| | | | | |
| Shrink, 12µm | 5 | 5 | 5 | 5 |
| | | | | |
| 200 double MEK rubs (gloss card, 12 µm) | | | | |
| @600mJ/cm² cure | 3-4 | 5 | 2 | 1 |
| | | | | |
| Gloss (gloss-card, 12µm) | | | | |
| @20° | 66 | 80 | 65 | 73 |
| @60° | 94 | 94 | 93 | 94 |
| | | | | |
| Chemical resistance (gloss card, 12 µm) | | | | |
| 1% NaOH solution (1 hr) | 4-5 | 4-5 | 4-5 | 4-5 |
| Muscle citron (1hr) | 4-5 | 4-5 | 4-5 | 4-5 |
| | | | | |

**Table 3 - (ink test results)(continued from previous page)**

| | Examples | | | |
|---|---|---|---|---|
| (Rating: 0 = poor; 5 = excellent | | | | |
| | Ex-3 | Ex-4 | Comp-C | Comp-D |
| Adhesion, 1 2µm (% lift off) | | | | |
| OPP Coex, MB400 | | | | |
| Scotch | 0 | 20 | 0 | 50 |
| Sello | 20 | 5 | 0 | 0 |
| Scapa | 75 | 100 | 75 | 100 |
| OPP XL-210 | | | | |
| Scotch | 0 | 0 | 0 | 0 |
| Sello | 0 | 0 | 0 | 0 |
| Scapa | 25 | 40 | 60 | 60 |
| PET, Melinex S | | | | |
| Scotch | 100 | 100 | 100 | 100 |
| Sello | 60 | 5 | 70 | 5 |
| Scapa | 100 | 50 | 100 | 100 |
| PE, ex oerlemans | | | | |
| Scotch | 0 | 5 | 0 | 25 |
| Sello | 0 | 5 | 0 | 0 |
| Scapa | 60 | 75 | 60 | 100 |
| PVC, ex Fasson | | | | |
| Scotch | 0 | 0 | 0 | 0 |
| Sello | 0 | 0 | 0 | 0 |
| Scapa | 0 | 0 | 0 | 10 |
| Cure speed (Gloss-card, 12µm) | | | | |
| 100 mJ/cm² | 11 | 20 | 14 | 25 |
| 200 mJ/cm² | 30 | 50 | 20 | 50 |
| 300 mJ/cm² | 47 | 90 | 35 | 80 |
| Cure speed (Gloss-card, 12µm) continued | | | | |
| 400 mJ/cm² | 60 | 160 | 35 | 110 |
| 500 mJ/cm² | 90 | 200 | 47 | 140 |
| 600 mJ/cm² | 100 | 200 (5) | 60 | 170 |
| 700 mJ/cm² | 110 | - | 67 | 200 (2) |
| 800 mJ/cm² | 150 | - | 70 | NM? |
| 900 mJ/cm² | 200 (3-4) | - | 85 (0) | NM? |

Coatings where also prepared and tested to show the surprising difference between a radiation cured CCTP polymer prepared as a 100% solid and a CCTP polymer in a solvent.
Comp B = CCTP in a 100% UV formulation
Comp C = CCTP in an UV solvent based formulation.

The solid acrylics that have been used are: **DJ-1156C** (solid CCTP - acrylic) and **DJ-1157C** (solid CTA-acrylic).

### Cure speed:

The reactivity of formulation A (monomers only) is the best due to the large amount of reactive groups.

The reactivity of formulation B (monomers with DJ-1156C) is slower than formulation A due to smaller amount of functional groups.

The reactivity of formulation B is faster than formulation C (monomers with DJ-1157C).

The solid acrylic of formulation C does not have a reactive group and therefore reactivity is less than formulation B.

Formulation D and E do not contain monomers and hence reactivity is very poor.

### Adhesion:

Results show that the presence of a solid acrylic improves adhesion and that formulation B shows better adhesion than formulation C due to the reactive groups of the solid acrylic.

Formulations D and E (solid acrylic with MEK) show better adhesion than the formulations with monomer on OPP and PE.

Without wishing to be bound by any mechanism the applicant believes that as coatings from formulations A, B and C shrink to a greater degree than coatings from formulations D and E coatings A, B and C have poorer adhesion to the substrate than coatings D and E.

### Shrink:

Solid acrylics have a positive effect on shrink due to its spacing characteristics. Formulation A shows a great amount of shrink whereas the formulations with solid acrylics do not give shrink.

### Alkali resistance:

Formulation A shows poor alkali resistance/satra rub due to the absence of a solid acrylic which would provide the properties of the coating.

Formulations B and C show good alkali resistance/satra rub.

Formulations D an E show poor alkali resistance because there was no cure and therefore the properties were not met.

### Gloss:

Formulations B and C show higher gloss than formulations A, D and E. No explanation can be found yet at the moment.

### Hardness:

The formulations without solvent show more hardness probably due to the higher crosslink density.

Formulation B shows more hardness than formulation C due to higher crosslink density.

### Satra rub:

Formulations D an E show poor satra rub because there was no cure and therefore the properties were not met.

Formulation A showed the best satra rub due to a high crosslink density. Formulations B and C show also good satra rub, but somewhat less than formulation A due to the lower crosslink density.

### Conclusions:

Without wishing to be bound by any mechanism the applicants believe that the results show that:
Reactivity of a CCTP-polymer is better than a CTA-polymer.
Formulations with solid acrylics improve adhesion.
Adhesion of a CCTP-polymer is better than a CTA-polymer.
Solid acrylics have a positive effect on shrink, alkali resistance, gloss and increase the hardness of a system.
A CCTP-polymer produce a harder coating than a CTA- polymer.

| Method. | Version nr. | Description |
|---|---|---|
| GAP0020 | 001 | Viscosity measurements Brookfield DV-1 |
| APP 0217 | 001 | Chemical resistance GA (A: Chemical rub resistance: 200 double rubs, MEK, 12µ, gloss-card, tissue rub.) |
| APP 0232 | 001 | Gloss (Byk Gardner tri-gloss measurements) (12µ, gloss-card) |
| APP-0233 | 010 | König hardness (glass, 24µ and 50µ @ 600 and 1200 mj/cm²) |
| APP 0236 | 001 | Adhesion (tape test) GA |
| APP 0251 | 000 | Storage stability GA (RT/52°C) |
| APP 0461 | 000 | Satra rub resistance (Leneta transparency card) |

Film appearance (grains, film defects, colouring etc.) Visual judgment Curing effectivity (200 double MEK rubs according APP 0217, after each pass (certain intensity in mj/cm², 6µ, gloss-card)
Shrink (gloss card, 12µ, curling of the card when a cross is cut into card)

| | | |
|---|---|---|
| APP 0465 | 000 | NaOH and Mr. Muscle resistance |

| Formulation | | A | B | C | D | E |
|---|---|---|---|---|---|---|
| | Based on standard UV ink formulation) | Only reactive diluents | CCTP polymer +RD | CTA polymer + RD | CCTP polymer + solvent | CTA polymer + solvent |
| E-10-20T | | - | - | - | - | - |
| DJ-1156C | | - | 40 | - | 40 | - |
| DJ-1157C | | - | - | 40 | - | 40 |
| | --------- | --------- | --------- | --------- | --------- | --------- |
| Total polymers + pigment | 40 | 0 | 40 | 40 | 40 | 40 |
| HDDA | 9.9 | 9.9 | 9.9 | 9.9 | - | - |
| TMPTA | 23.4 | 23.4 | 23.4 | 23.4 | - | - |
| TPGDA | 16.1 | 16.1 | 16.1 | 16.1 | - | - |
| | --------- | --------- | --------- | --------- | --------- | --------- |
| Total reactive diluents | 49.4 | 49.4 | 49.4 | 49.4 | 0 | 0 |
| MEK | - | - | - | - | 49.4 | 49.4 |
| MDEA | 2.2 | 2.2 | 2.2 | 2.2 | 2.2 | 2.2 |
| Irgacure 379 | 2.2 | 2.2 | 2.2 | 2.2 | 2.2 | 2.2 |
| Darocur ITX | 2.2 | 2.2 | 2.2 | 2.2 | 2.2 | 2.2 |
| Genocure PBZ | 2.3 | 2.3 | 2.3 | 2.3 | 2.3 | 2.3 |
| Genorad 16 | 1.7 | 1.7 | 1.7 | 1.7 | 1.7 | 1.7 |
| Totals | 100 | 60 | 100 | 100 | 100 | 100 |

| Formulation | A | B | C | D | E |
|---|---|---|---|---|---|
| | Only reactive diluents | CCTP polymer +RD | CTA polymer + RD | CCTP polymer + solvent | CTA polymer + solvent |
| Satra rub (leneta transparency card, 12µm) | | | | | |
| 4000 Dry | 5 | 4 | 4 | 2 | 2 |
| 4000 olive oil | 4-5 | 4-5 | 4-5 | 3 | 3 |
| Hardness (König 24 µm) | | | | | |
| 1200 mJ cure | 91 | 94 | 83 | 95 | 78 |
| Shrink, 12µm | | | | | |
| | 3 | 5 | 5 | 5 | 5 |
| Gloss (gloss-card, 12µm) | | | | | |
| 20° | 79 | 85 | 85 | 62 | 63 |
| 60° | 96 | 92 | 92 | 88 | 89 |
| Alkali resistance (gloss card, 12µm) | | | | | |
| 1% NaOH solution (1 hr) | 2 | 5 | 5 | 1 | 1 |
| Muscle citron (1 hr) | 1 | 5 | 5 | 1 | 1 |

| Formulation | | A | B | C | D | E |
|---|---|---|---|---|---|---|
| | | Only reactive diluents | CCTP polymer +RD | CTA polymer + RD | CCTP polymer + solvent | CTA polymer + solvent |
| Adhesion, 12µm (% lift off) | | | | | | |
| OPP Coex, MB400 | Scotch | 100 | 100 | 100 | 0 | 0 |
| | Sello | 60 | 0 | 75 | 5 | 5 |
| | Scapa | 100 | 50 | 100 | 5 | 5 |
| OPP XL-210 | Scotch | 100 | 50 | 100 | 0 | 0 |
| | Sello | 100 | 0 | 10 | 5 | 5 |
| | Scapa | 100 | 50 | 100 | 5 | 5 |
| PET, Melinex S | Scotch | 100 | 100 | 100 | 100 | 100 |
| | Sello | 100 | 100 | 100 | 100 | 100 |
| | Scapa | 100 | 100 | 100 | 100 | 100 |
| PE, ex oerlemans | scotch | 100 | 0 | 0 | 0 | 0 |
| | Sello | 40 | 5 | 5 | 5 | 5 |
| | Scapa | 100 | 10 | 15 | 5 | 5 |
| PVC, ex Fasson | Scotch | 0 | 0 | 0 | 5 | 5 |
| | Sello | 0 | 0 | 0 | 5 | 5 |
| | Scapa | 0 | 5 | 25 | 5 | 5 |

| Formulation | A | B | C | D | E |
|---|---|---|---|---|---|
| | Only reactive diluents | CCTP polymer +RD | CTA polymer + RD | CCTP polymer + solvent | CTA polymer + solvent |
| Cure speed (Gloss-card, 12µm) | | | | | |
| 100 mJ/cm² | 200(4-5) | 15 | 20 | 3 | 4 |
| 200 mJ/cm² | 200(5) | 36 | 25 | 6 | 4 |
| 300 mJ/cm² | | 60 | 40 | 6 | 4 |
| 400 mJ/cm² | | 90 | 50 | 6 | 4 |
| 500 mJ/cm² | | 110 | 60 | 6 | 4 |
| 600 mJ/cm² | | 200(1) | 90 | 6 | 4 |
| 700 mJ/cm² | | 200(4-5) | 90 | 6 | 4 |
| 800 mJ/cm² | | 200(4-5) | 100 | 6 | 4 |
| 900 mJ/cm² | | 200(4-5) | 120 | 6 | 4 |
| 1000 mJ/cm² | | 200(4-5) | 110 | 6 | 4 |
| 1100 mJ/cm² | | 200(5) | 120 | 6 | 4 |

## Claims

1. A substantially solid, solvent free, radiation curable composition comprising
a) optionally from 0.1 % to 99.9% by weight of a colorant; and
b) from 0.1% to 99.9% of radiation curable polymer obtained and/or obtainable from at least one mono-(terminal functional forming) monomer of formula I:
R¹R²)C=CR³(C=O)(X¹)ₙR⁴ Formula 1,
where
n is 0 or 1,
X¹ is oxy or -NR⁵- (where R⁵ represents H or optionally substituted organo),
R¹ independently represents optionally substituted C₁₋₁₀hydrocarbo, hydroxyl, optionally substituted C₂₋₁₀hydrocarbo-oxy comprising a ring moiety, and/or carboxy; and
R², R³ and R⁴ each independently represent H, an optional substituent and/or optionally substituted organo groups and where n is 0, R³ may also represent oxy or -NR⁵-; and
c) optionally from 0.1% to 90% of a radiation curable high molecular weight reactive diluent; and
d) optionally from 0.01 to 10% of at least one photo-initiator; and
where the radiation curable polymer (b) is
i) obtained and/or obtainable in a suspension polymerisation process using a cobalt catalyst as a chain transfer agent;
ii) is solid under standard conditions; and
iii) is mono-(terminal functional) comprising one terminally located activated unsaturated moiety (such as of Formula 1 herein).
where the composition has at least one of the properties (A) to (F):
A) is substantially free of volatile organic compounds (VOCs);
B) has a residual concentration of initiator (such as peroxide) of less than 0.025 g per g of polymer;
C) comprises a polymer having a total ethylenic unsaturation (for example from moiet(ies) of Formula 1, such as C=C and/or (meth)acrylate) greater than 0.1 milli-equivalents C=C per g polymer;
D) is substantially-free of sulphur comprising species;
E) is substantially free of cobalt (II) species; and/or
F) has a weight average molecular weight (M_{w}) of less then 25kDa.

2. A composition as claimed in claim 1 which is an ink and optional further comprises a colorant.

3. A composition as claimed in claim 1 or 2 which is a printing ink, pigment paste and/or let down vehicle.

4. A composition as claimed in claim 1 or 2 which complys with the conditions set out in one or more of the relevant EU regulations: 1935/2004/EC (framework), 2002/72/EC (monomers), 2004/1/EC (1st amendment), 2004/19/EC (2nd amendment), 2005/79/EC (3rd amendment), 2007/19/EC (4th amendment), 2008/39/EC (5th amendment) and/or 2009/975/EC (6th amendment).

5. A radiation curable polymer obtained and/or obtainable from at least one mono-(terminal functional forming) monomer of formula I:
R¹(R²)C=CR³(C=O)(X¹)ₙR⁴ Formula 1,
where
n is 0 or 1,
X¹ is oxy or -NR⁵- (where R⁵ represents H or optionally substituted organo),
R¹ independently represents optionally substituted C₁₋₁₀hydrocarbo, hydroxyl, optionally substituted C₂₋₁₀hydrocarbo-oxy comprising a ring moiety, and/or carboxy; and
R², R³ and R⁴ each independently represent H, an optional substituent and/or optionally substituted organo groups and where n is 0, R³ may also represent oxy or -NR⁵ ; and
where the radiation curable polymer is
i) obtained and/or obtainable in a suspension polymerisation process using a cobalt catalyst as a chain transfer agent;
ii) is solid under standard conditions; and
iii) is mono-(terminal functional) where the terminal functional group is selected from the group consisting of: methacrylate, hydroxyl methacrylate, epoxy methacrylate, carboxy methacrylate and urea methacrylate.

6. A method of preparing a composition comprising the steps of:
I) mixing
a) optionally from 0.1 % to 99.9% by weight of a colorant; with
b) from 0.1 % to 99.9% of radiation curable polymer of the invention as described herein;
c) optionally from 0.1 % to 90% of a radiation curable high molecular weight reactive diluent
d) optionally from 0.01 to 10% of at least one photo-initatior; and
to form a mixture where the composition has at least one of the properties (A) to (E):
A) is substantially free of volatile organic compounds (VOCs);
B) has a residual concentration of initiator (such as peroxide) of less than 0.025 g per g of polymer;
C) comprises a polymer having a total ethylenic unsaturation (for example from moiet(ies) of Formula 1, such as C=C and/or (meth)acrylate) greater then 0.1 milli-equivalents of C=C per g polymer;
D) is substantially-free of sulphur comprising species; and/or
E) is substantially free of cobalt (II) species.

7. A composition obtained and/or obtainable by a method as claimed in claim 6.

8. A method of using the composition as claimed in any of claims 1 to 4 and 7 and/or a polymer as claimed in claim 5, the method comprising the steps of:
coating a substrate with the composition and/or the polymer; and
irradiating said substrate with actinic radiation and/or an electron beam to form a cured coating thereon.

9. A method as claimed in claim 8, which is a printing method and where the polymer and/or coating is an ink and/or component thereof and where the method forms a cured image on the substrate.

10. A substrate coated with a composition as claimed in any of claims 1 to 4 and 7; coated with polymer as claimed in claim 5 and/or obtained by a method as claimed in claim 8 or 9.
